# EUROPEAN PATENT SPECIFICATION

(11) **EP 1 026 042 B1**
(45) Date of publication and mention of the grant of the patent: **28.04.2004**
(21) Application number: 00200346.5
(22) Date of filing: 02.02.2000
(51) Int. Cl.: B60R 16/02

(54) **Battery protection system**
Batterieschutzsystem
Système de protection de batterie

(30) Priority: 05.02.1999 GB 9902500
(43) Date of publication of application: 09.08.2000
(73) Proprietor: Delphi Technologies, Inc., Troy, MI 48007 (US)
(72) Inventor: Volpone, Mattew, 58256 Ennepetal (DE); Kullick, Peter, 44651 Herne (DE)
(74) Representative: Denton, Michael John

(56) References cited:
- US-A- 5 191 228
- US-A- 5 200 877
- US-A- 5 296 788

## Description

### Technical Field

The present invention relates to a battery protection system for the battery of a motor vehicle.

### Background of the Invention

US patent application no. US 5.200.877 discloses a protection system for a motor vehicle battery according to the preamble of claim 1 in which a reversible electric motor is used to connect and disconnect selected loads under certain vehicle conditions.

### Summary of the Invention

The object of the present invention is to provide an electrical circuit for operating the electric motor.

A battery protection system in accordance with the present invention for the battery of a motor vehicle comprises a switch connectable between the battery and an electrical load; a reversible electric motor for opening and closing the switch and connected to the switch on the battery side thereof; a switch opening circuit connected to the switch on the electrical load side thereof; a switch closing circuit connected to the electric motor and to the switch on the battery side thereof; and control means connected to the switch opening circuit and to the switch closing circuit and monitoring predetermined vehicle conditions, the control means actuating the electric motor by way of the switch opening circuit to open the switch, or by way of the switch closing circuit to close the switch, dependent on the monitored vehicle conditions.

The present invention a battery protection system which can operate to open the switch if an adverse condition is detected, and/or to close the switch when an adverse condition is not detected.

### Brief Description of the Drawings

The present invention will now be described, by way of example, with reference to the accompanying drawings, in which:-
Figure 1 is a circuit diagram of a battery protection system in accordance with the present invention; and
Figure 2 is a circuit diagram of a second embodiment of battery protection system in accordance with the present invention.

### Description of the Preferred Embodiment

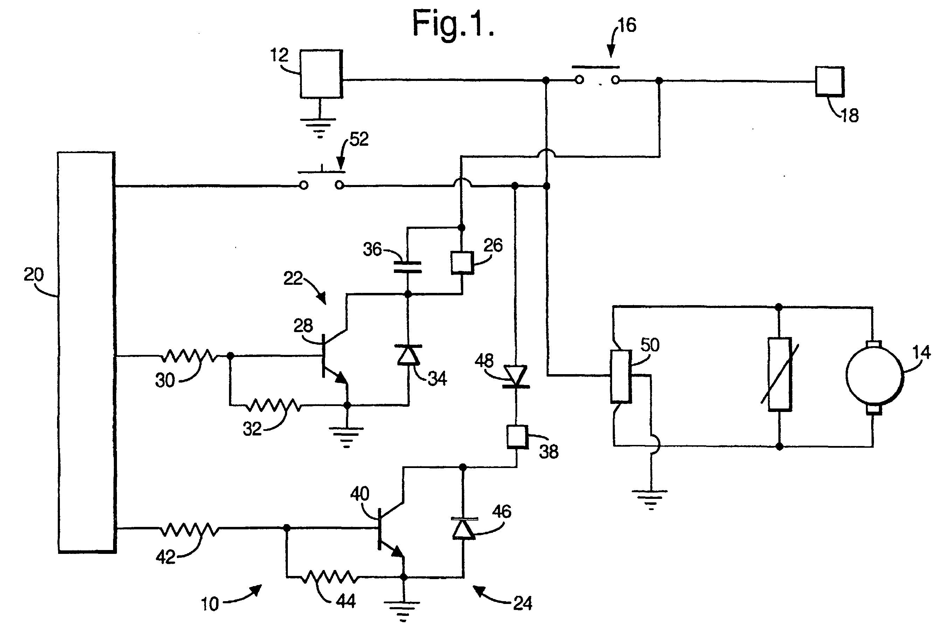

Referring to Figure 1 of the drawing, the battery protection system 10 is for use with the battery 12 of a motor vehicle in which a reversible electric motor 14 is used to open and close a switch 16 connected between the battery and selected electrical loads 18 in the motor vehicle.

The system 10 includes a control unit 20 (preferably including a microprocessor) which monitors predetermined vehicle conditions (such as a collision) and actuates the motor 14 to open or close the switch 16 as required. The system 10 also includes a switch opening circuit 22 and a switch closing circuit 24.

The switch opening circuit 22 is connected between the control unit 20 and the side of the switch 16 remote from the battery 12. The switch opening circuit 22 includes a relay 26 which is connected between the switch 16 and the collector of a transistor 28. The base of the transistor 28 is connected to the control unit 20 by way of a resistor 30. The emitter of the transistor 28 is connected to electrical ground. A resistor 32 is connected between the base and the emitter of the transistor 28. A diode 34 is connected between the emitter and the collector of the transistor 28. A capacitor 36 is preferably connected in parallel with the relay 26 to provide power to the electric motor 14 for a limited period of time after the switch 16 opens to ensure complete and full opening of the switch.

The switch closing circuit 24 is connected between the control unit 20 and the side of the switch 16 adjacent the battery 12. The switch closing circuit 24 includes a relay 38 which is connected between the switch 16 and the collector of a transistor 40. The base of the transistor 40 is connected to the control unit 20 by way of a resistor 42. The emitter of the transistor 40 is connected to electrical ground. A resistor 44 is connected between the base and the emitter of the transistor 40. A diode 46 is connected between the emitter and the collector of the transistor 40. A diode 48 is preferably connected between the relay 38 and the switch 16.

The motor 14 is connected to a motor control relay 50 which is also connected to the side of the switch 16 adjacent the battery 12. The control relay 50 acts to change the polarity of the motor 14 and to actuate the motor. The diode 48 ensures that the motor 14 opens, or keeps open, the switch 16 if a reverse battery condition is detected (for example, during a jump-start where a second battery is incorrectly connected to the battery 12). The switch opening circuit 22 and the switch closing circuit 24 actuate the control relay 50.

A manually operable switch 52 may be connected between the control unit 20 and the side of the switch 16 adjacent the battery 12, in parallel with the switch closing circuit 24. The manually operable switch 52 can be used to drive the motor 14 to close the switch 16. The same or a similar manually operable switch may be provided for manually driving the motor 14 to open the switch 16.

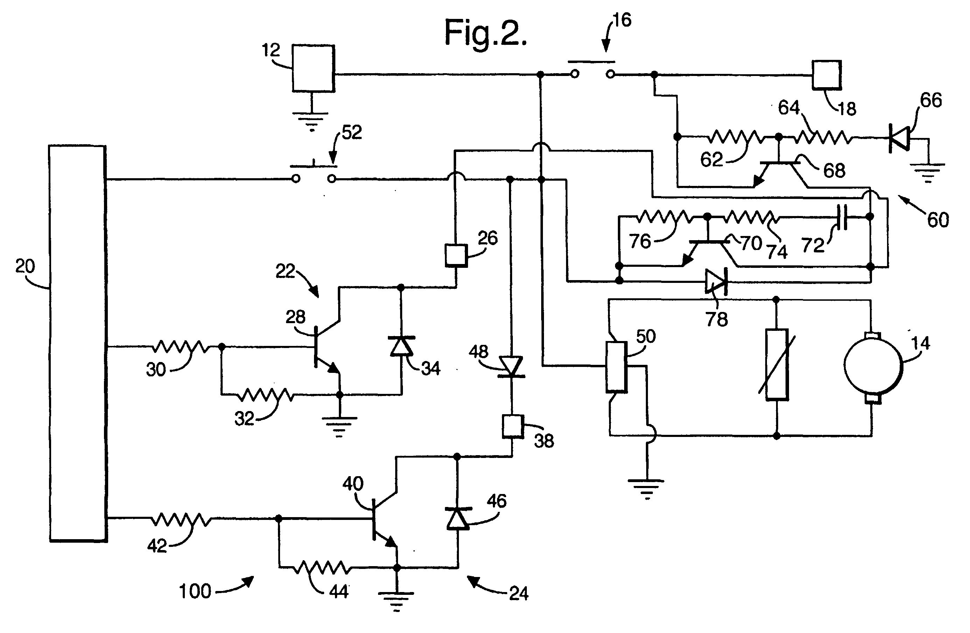

In the second embodiment of a battery protection system 100 as shown in Figure 2, like parts (when compared to the embodiment of Figure 1) have been given the same reference numeral. In comparison to Figure 1, the capacitor 36 has been removed and the connection from the relay 26 to the switch 16 is replaced by a circuit 60 which provides power to the electric motor 14 for a limited period of time after the switch 16 opens. The circuit 60 is also connected between the diode 48 of the switch closing circuit 24 and the switch 16 to provide power to the electric motor 14 for a limited period of time after the switch 16 closes. The circuit 60 comprises a pair of resistors 62, 64 and a diode 66 connected in series as shown between the switch 16 and electrical ground. The base of a first transistor 68 is connected between the resistors 62,64, and the emitter of the first transistor is connected to the switch 16. The collector of the transistor 68 is connected to the relay 26, the collector of a second transistor 70, and a capacitor 72. The base of the second transistor 70 is connected between a pair of resistors 74,76 which are connected in series, and in series with the capacitor 72, between the collector of the first transistor 68 and the diode 48 and the control relay 50. The emitter of the second transistor 70 is also connected to the diode 48 and the control relay 50. A diode 78 is connected between the emitter and the collector of the second transistor 70.

The present invention operates to open the switch 16 if an adverse condition is detected, and/or to close the switch when an adverse condition is not detected, by the control unit. The present invention may also include arrangements for ensuring full and complete opening of the switch, and for opening the switch if a reverse battery condition is detected.

## Claims

1. A battery protection system (10) for the battery (12) of a motor vehicle comprising a switch (16) connectable between the battery and an electrical load (18); a reversible electric motor (14) for opening and closing the switch and connected to the switch on the battery side thereof; a switch opening circuit (22); a switch closing circuit (24) connected to the electric motor and to the switch on the battery side thereof; and control means (20) connected to the switch opening circuit and to the switch closing circuit and monitoring predetermined vehicle conditions, the control means actuating the electric motor by way of the switch opening circuit to open the switch, or by way of the switch closing circuit to close the switch, dependent on the monitored vehicle conditions; **characterised in that** the switch opening circuit is connected to the switch on the electrical load side thereof.

2. A battery protection system as claimed in Claim 1, wherein the switch opening circuit includes circuit means (36,60) for providing power to the electric motor for a limited period of time after the switch opens.

3. A battery protection system as claimed in Claim 2, wherein the circuit means includes a capacitor (36).

4. A battery protection system as claimed in Claim 2, wherein the circuit means (60) includes a first transistor (68) having a base connected between a pair of resistors (62,64) connected in series between the switch (16) and electrical ground, the emitter of the first transistor being connected to the switch.

5. A battery protection system as claimed in Claim 4, wherein the circuit means further includes a second transistor (70) having a base connected between a pair of resistors (74,76) connected in series between the collector of the first transistor (68) and the switch closing circuit (24), a collector connected to the collector of the first transistor, and an emitter connected to the switch closing circuit.

6. A battery protection system as claimed in any one of Claims 1 to 5, wherein the switch closing circuit (24) includes a diode (48) for preventing closing of the switch (16) by the electric motor (14) if power of incorrect polarity is connected to the battery (12).

7. A battery protection system as claimed in any one of Claims 1 to 6, wherein a control relay (50) is connected across the electric motor (14), the control relay acting to alter the polarity of the electric motor and to actuate the electric motor, the switch opening circuit (22) and the switch closing circuit (24) actuating the control relay.

8. A battery protection system as claimed in any one of Claims 1 to 7, wherein a manually operable switch (52) is connected in parallel with the switch closing circuit (24).

## Patentansprüche

1. Batterieschutzsystem (10) für die Batterie (12) eines Kraftfahrzeugs, mit einem Schalter (16), der zwischen die Batterie und eine elektrische Last (18) geschaltet ist; einem umkehrbaren Elektromotor (14) zum Öffnen und Schließen des Schalters, der mit dem Schalter auf dessen Batterieseite verbunden ist; einer Schaltung (22) zum Öffnen des Schalters; einer Schaltung (24) zum Schließen des Schalters, die mit dem Elektromotor und dem Schalter auf dessen Batterieseite verbunden ist; und einem Steuermittel (20), das mit der Schaltung zum Öffnen des Schalters und der Schaltung zum Schließen des Schalters verbunden ist und vorbestimmte Fahrzeugzustände überwacht, wobei das Steuermittel abhängig von den überwachten Fahrzeugzuständen den Elektromotor durch die Schaltung zum Öffnen des Schalters betätigt, um den Schalter zu öffnen, oder den Elektromotor durch die Schaltung zum Schließen des Schalters betätigt, um den Schalter zu schließen, **dadurch gekennzeichnet, dass** die Schaltung zum Öffnen des Schalters mit dem Schalter auf dessen elektrischen Lastseite verbunden ist.

2. Batterieschutzsystem nach Anspruch 1, wobei die Schaltung zum Öffnen des Schalters ein Schaltungsmittel (36, 60) umfasst, um für eine begrenzte Zeitdauer Strom an den Elektromotor zu liefern, nachdem der Schalter geöffnet hat.

3. Batterieschutzsystem nach Anspruch 2, wobei das Schaltungsmittel einen Kondensator (36) umfasst.

4. Batterieschutzsystem nach Anspruch 2, wobei das Schaltungsmittel (60) einen ersten Transistor (68) umfasst, der eine Basis aufweist, die zwischen ein Paar von Widerständen (62, 64) geschaltet ist, die in Reihe zwischen den Schalter (16) und die elektrische Masse geschaltet sind, wobei der Emitter des ersten Transistors mit dem Schalter verbunden ist.

5. Batterieschutzsystem nach Anspruch 4, wobei das Schaltungsmittel ferner einen zweiten Transistor (70) umfasst, der eine Basis, die in Reihe zwischen ein Paar von Widerständen (74,76) geschaltet ist, die zwischen den Kollektor des ersten Transistors (68) und die Schaltung (24) zum Schließen des Schalters geschaltet sind, einen Kollektor, der mit dem Kollektor des ersten Transistors verbunden ist, und einen Emitter aufweist, der mit der Schaltung zum Schließen des Schalters verbunden ist.

6. Batterieschutzsystem nach einem der Ansprüche 1 bis 5, wobei die Schaltung (24) zum Schließen des Schalters eine Diode (48) umfasst, um ein Schließen des Schalters (16) durch den Elektromotor (14) zu verhindern, wenn Strom mit falscher Polarität mit der Batterie (12) verbunden wird.

7. Batterieschutzsystem nach einem der Ansprüche 1 bis 6, wobei ein Steuerrelais (50) über den Elektromotor (14) geschaltet ist, wobei das Steuerrelais dazu dient, die Polarität des Elektromotors zu wechseln und den Elektromotor zu betätigen, wobei die Schaltung (22) zum Öffnen des Schalters und die Schaltung (24) zum Schließen des Schalters das Steuerrelais betätigen.

8. Batterieschutzsystem nach einem der Ansprüche 1 bis 7, wobei ein manuell betätigbarer Schalter (52) parallel zu der Schaltung (24) zum Schließen des Schalters geschaltet ist.

## Revendications

1. Système de protection de batterie (10) pour la batterie d'un véhicule à moteur, comprenant un commutateur (16) qui peut être connecté entre la batterie et une charge électrique (18); un moteur électrique réversible (14) pour ouvrir et fermer le commutateur et qui est connecté au commutateur sur son côté batterie; un circuit d'ouverture de commutateur (22); un circuit de fermeture de commutateur (24) connecté au moteur électrique et au commutateur sur son côté batterie; et un moyen de commande (20) connecté au circuit d'ouverture du commutateur et au circuit de fermeture du commutateur et contrôlant des conditions prédéterminées du véhicule, le moyen de commande actionnant le moteur électrique au moyen du circuit d'ouverture du commutateur pour ouvrir le commutateur et au moyen du circuit de fermeture du commutateur pour fermer le commutateur en fonction des conditions contrôlées du véhicule; **caractérisé en ce que** le circuit d'ouverture du commutateur est connecté au commutateur sur son côté charge électrique.

2. Système de protection de batterie selon la revendication 1, dans lequel le circuit d'ouverture du commutateur comprend un moyen à circuit (36, 60) pour délivrer de l'énergie au moteur électrique pendant une période de temps limitée après que le commutateur a été ouvert.

3. Système de protection de batterie selon la revendication 2, dans lequel le moyen à circuit comprend un condensateur (36).

4. Système de protection de batterie selon la revendication 2, dans lequel le moyen à circuit (60) comprend un premier transistor (68) ayant une base connectée entre deux résistances (62, 64) connectées en série entre le commutateur (16) et la masse électrique, l'émetteur du premier transistor étant connecté au commutateur.

5. Système de protection de batterie selon la revendication 4, dans lequel le moyen à circuit comprend en outre un second transistor (70) ayant une base connectée entre deux résistances (74, 76) connectées en série entre le collecteur du premier transistor (68) et le circuit de fermeture de commutateur (24), un collecteur connecté au collecteur du premier transistor et un émetteur connecté au circuit de fermeture du commutateur.

6. Système de protection de batterie selon l'une quelconque des revendications 1 à 5, dans lequel le circuit de fermeture de commutateur (24) comprend une diode (48) pour empêcher la fermeture du commutateur (16) par le moteur électrique (14) si une énergie de polarité incorrecte est connectée à la batterie (12).

7. Système de protection de batterie selon l'une quelconque des revendications 1 à 6, dans lequel un relais de commande (50) est connecté aux bornes du moteur électrique (14), le relais de commande ayant pour fonction de modifier la polarité du moteur électrique et d'actionner le moteur électrique, le circuit d'ouverture de commutateur (22) et le circuit de fermeture de commutateur (24) actionnant le relais de commande.

8. Système de protection de batterie selon l'une quelconque des revendications 1 à 7, dans lequel un commutateur actionnable à la main (52) est connecté en parallèle avec le circuit de fermeture de commutateur (24).
